# FASCICULE DE BREVET EUROPEEN

(11) **EP 0 837 555 B1**
(45) Date de publication et mention de la délivrance du brevet: **28.03.2001**
(21) Numéro de dépôt: 97402268.3
(22) Date de dépôt: 29.09.1997
(51) Int. Cl.: H02P 9/02, G05B 9/03

(54) **Dispositif de régulation d'un alternateur synchrone sans balais**
Steuerungsvorrichtung für bürstenlosen Synchrongenerator
Regulating device for brushless synchronous alternator

(30) Priorité: 18.10.1996 FR 9612707
(43) Date de publication de la demande: 22.04.1998
(73) Titulaire: LEROY-SOMER, 16015 Angoulème (FR)
(72) Inventeur: Czajkowski, François, 16730 Linars (FR)
(74) Mandataire: Derambure, Christian

(56) Documents cités:
- EP-A- 0 233 425
- EP-A- 0 615 180
- WO-A-96/10288
- US-A- 3 500 165
- US-A- 4 100 440
- US-A- 5 294 879

## Description

La présente invention concerne un dispositif de régulation d'un alternateur synchrone sans balais comprenant une excitatrice tournante à inducteur d'excitation fixe, pour la régulation de plusieurs paramètres, notamment le courant d'excitation, la tension de sortie de l'alternateur, la tension à vide, le courant de court-circuit, le facteur de puissance et le statisme de l'alternateur.

On connaît des dispositifs de régulation d'alternateur comportant un étage de puissance relié à l'alternateur et un circuit de régulation relié à l'étage de puissance pour la régulation desdits paramètres.

Suivant un premier mode de réalisation connu, par exemple du document EP-A-0 233 425, le circuit de régulation est un circuit analogique utilisant d'une part la tension fondamentale et d'autre part la tension de troisième harmonique de l'alternateur pour réaliser la régulation.

Ce circuit de régulation analogique présente l'avantage de supporter des puissances importantes et d'être résistant aux vibrations mécaniques, de sorte qu'il peut être placé sur le carter de l'alternateur.

Cependant, les circuits analogiques présentent généralement l'inconvénient de fournir des fonctions limitées, dans le cas présent à la régulation de quelques paramètres.

Suivant un autre mode de réalisation connu, par exemple du document US-5 294 879, le circuit de régulation est un circuit numérique qui n'est pas positionné sur le carter de l'alternateur.

En effet, bien que le circuit numérique présente l'avantage d'obtenir un nombre de fonctions considérable, il présente l'inconvénient d'être particulièrement sensible aux vibrations mécaniques ou magnétiques et ainsi de ne pouvoir être placé sur le carter de l'alternateur.

Par conséquent, il est nécessaire de prévoir des liaisons entre l'alternateur proprement dit et le circuit de régulation, ce qui implique des risques d'endommagement de ces liaisons.

L'invention vise à pallier les inconvénients précédemment mentionnés.

A cet effet, l'invention a pour objet un dispositif de régulation d'un alternateur qui permet d'améliorer les performances obtenues à l'aide d'un circuit analogique tout en utilisant celles obtenues à l'aide d'un circuit numérique.

En d'autres termes, l'invention a pour objectif de garder dans une position de secours la fiabilité initiale du circuit analogique tout en pouvant utiliser le plus possible les performances d'un circuit numérique.

A cet effet, l'invention propose un dispositif de régulation d'un alternateur synchrone sans balais comprenant une excitatrice tournante à inducteur d'excitation fixe et qui comporte en combinaison :
- un étage de puissance relié à l'alternateur ;
- un circuit analogique de régulation apte à être relié à l'étage de puissance, pour la régulation de plusieurs paramètres, notamment le courant d'excitation, la tension de sortie de l'alternateur, la tension à vide, le courant de court-circuit, le facteur de puissance et le statisme de l'alternateur ;
- un circuit numérique de régulation apte à être relié à l'étage de puissance, pour la régulation de plusieurs paramètres, notamment la tension de sortie de l'alternateur, la tension à vide, le courant de court circuit et le statisme de l'alternateur ; et
- un circuit de commande destiné à permettre le fonctionnement du dispositif de régulation suivant deux modes, à savoir un mode normal dans lequel la fonction de régulation est réalisée par le circuit numérique de régulation et un mode dit "dégradé" dans lequel la fonction de régulation est réalisée par le circuit analogique de régulation,
le circuit numérique de régulation étant isolé notamment mécaniquement et/ou magnétiquement de l'alternateur et étant relié au circuit de commande par des liaisons électriques isolées.

En outre, en mode normal, le circuit numérique de régulation peut commander l'étage de puissance.

Comme nous l'avons précisé précédemment, pour améliorer la fiabilité du dispositif, le circuit numérique de régulation est monté dans un boîtier distinct de l'alternateur et le circuit analogique de régulation est positionné sur le carter de l'alternateur.

Suivant un mode de réalisation, le circuit de commande comporte :
- un dispositif de commande analogique/numérique destiné à recevoir des informations des circuits analogiques et numériques de régulation, et
- un commutateur commandé par le dispositif de commande de manière à positionner le dispositif de régulation en mode normal ou en mode dégradé en fonction desdites informations reçues.

Le commutateur peut être également positionné sur l'alternateur alors que le dispositif de commande est isolé notamment mécaniquement et/ou magnétiquement de l'alternateur

Suivant un autre mode de réalisation, le circuit numérique de régulation est apte à effectuer la régulation paramètre par paramètre.

En outre, il peut comporter des moyens de gestion de priorité aptes à commander un changement de paramètre en fonction de ces priorités, ainsi que des moyens de gestion de seuil de protection à plusieurs niveaux, avec accès hiérarchisé.

Dans la mesure où le commutateur est positionné sur l'alternateur, il peut être du type analogique pour faibles signaux.

Suivant un autre mode de réalisation, le dispositif de commande peut comporter des moyens de détection permettant de détecter un dysfonctionnement du circuit numérique de régulation, le circuit de commande faisant passer le dispositif de régulation du mode normal au mode dégradé en cas de détection.

En outre, le dispositif de régulation selon l'invention peut comporter des moyens d'indication de statuts tels que notamment le mode de fonctionnement et/ou les paramètres de programmation.

D'autres caractéristiques de l'invention résulteront de la description d'exemples de réalisation donnés à titre non limitatif en référence aux dessins annexés dans lesquels :

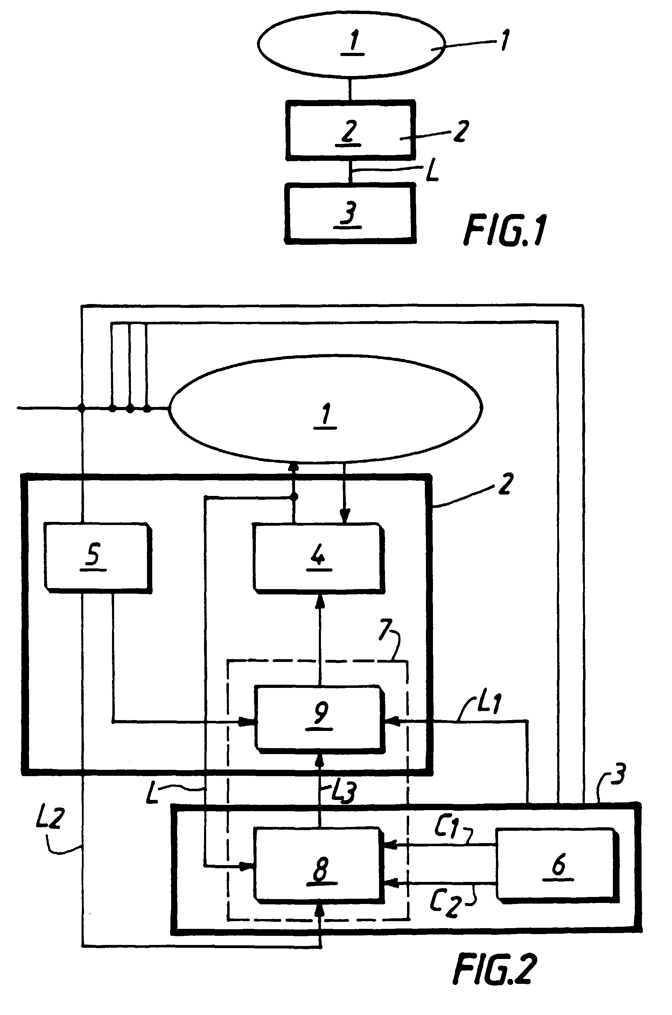

- la figure 1 est une représentation très schématique sous forme de bloc fonctionnel d'un dispositif de régulation selon l'invention ;
- la figure 2 est une représentation plus détaillée sous forme de bloc fonctionnel d'un dispositif de régulation selon l'invention ; et
- la figure 3 est une représentation schématique d'un bloc numérique d'un dispositif de régulation selon l'invention.

L'invention concerne un dispositif de régulation d'un alternateur 1 multi-fonctions à contrôle numérique destiné à équiper notamment des machines basse tension comportant un système d'excitation, tel que par exemple celui décrit dans le brevet EP-A-0 233 425.

Le dispositif de régulation comporte un bloc de puissance 2 et un bloc de contrôle ou bloc numérique 3.

Ces deux blocs 2 et 3 sont reliés entre eux par des liaisons électriques isolées L, L1 à L3, ces liaisons véhiculant notamment des informations électriques analogiques à basse tension et/ou à basse fréquence.

Le dispositif de régulation est destiné à fonctionner suivant deux modes, à savoir un mode normal dans lequel la fonction de régulation est réalisée par l'intermédiaire du bloc numérique 3, et un mode dit dégradé dans lequel la fonction de régulation est réalisée par l'intermédiaire du bloc de puissance 2.

En effet, le bloc de puissance 2 doit être apte à permettre un fonctionnement analogique autonome en mode dégradé en cas de défaillance ou d'absence du bloc numérique, ou en cas de coupure des liaisons L, L1 à L3 avec le bloc numérique 3.

Par conséquent, le bloc de puissance 2 peut être positionné sur l'alternateur 1, par exemple dans la boîte à borne, et peut être soumis aux contraintes d'environnement définies par les régulateurs analogiques.

A cet effet, le bloc de puissance 2 comporte un étage de puissance 4 relié de manière connue à l'inducteur d'excitation fixe de l'alternateur.

Cet étage de puissance 4 est en outre relié à un circuit analogique de régulation 5, qui est destiné à la régulation de plusieurs paramètres, tels que par exemple le courant d'excitation de l'alternateur, la tension de sortie de l'alternateur, la tension à vide, le courant de court-circuit, le facteur de puissance ou le statisme de l'alternateur.

Ce circuit analogique de régulation 5 peut être notamment du type de celui décrit dans la demande de brevet européen EP-A-0 233 425.

Il n'est opérationnel qu'en mode dégradé.

En revanche, le bloc numérique 3 ne peut pas être soumis aux contraintes d'environnement définies par les régulateurs analogiques.

Par conséquent, il est monté dans un boîtier distinct de l'alternateur.

Pour permettre le fonctionnement en mode normal, le bloc numérique 3 comporte un circuit numérique de régulation 6 relié de manière connue à l'inducteur d'excitation fixe de l'alternateur, pour la régulation de plusieurs paramètres tels que notamment la sortie de l'alternateur, la tension à vide, le courant de court-circuit et le statisme de l'alternateur, ce circuit 6 étant apte à être relié, en mode normal, à l'étage de puissance 4, par l'intermédiaire d'une première ligne isolée L1.

Le bloc numérique 3 comporte en outre un circuit de commande 7 qui est relié d'une part au circuit numérique de régulation 6, et d'autre part, par l'intermédiaire d'une deuxième ligne isolée L2, au circuit analogique de régulation 5.

Ce circuit de commande 7 est destiné à faire passer le dispositif de régulation selon l'invention du mode normal au mode dégradé et inversement, en fonction d'informations reçues du circuit numérique de régulation 6 d'une part et du circuit analogique de régulation 5, d'autre part.

A cet effet, le circuit de commande 7 comporte un dispositif de commande analogique/numérique 8, relié d'une part au circuit analogique de régulation 5 par l'intermédiaire de la liaison isolée L2, et d'autre part au circuit numérique de régulation 6 par l'intermédiaire des liaisons C1, C2.

Le circuit de commande 7 comporte, en outre, un commutateur 9, relié d'une part au dispositif de commande 8, et d'autre part au circuit analogique 5 et numérique 6 de régulation.

Ce commutateur 9 est commandé par le dispositif de commande 8, de manière à positionner le dispositif de régulation selon l'invention en mode normal ou en mode dégradé, en fonction desdites informations reçues.

Suivant un mode de réalisation, le commutateur 9 est du type analogique pour faibles signaux.

Ainsi, il peut être positionné sur l'alternateur 1, alors que le dispositif de commande est isolé, notamment mécaniquement et/ou magnétiquement de l'alternateur 1.

A cet effet, le dispositif de commande 8 est relié au commutateur 9 par l'intermédiaire d'une liaison isolée L3.

Par exemple, on peut prévoir que le commutateur 9 soit contenu dans le bloc de puissance 2.

Ainsi, pour passer en mode dégradé, il suffit qu'une au moins des liaisons L1 à L3 entre le bloc numérique 3 et le bloc de puissance 2 soit interrompue, la régulation de l'alternateur étant alors effectuée par l'intermédiaire du circuit analogique de régulation 5.

En revanche, en mode normal, le circuit numérique de régulation 6 commande par l'intermédiaire de la ligne isolée L1 et du commutateur 9, l'étage de puissance 4.

Suivant un mode de réalisation, le circuit numérique de régulation 6 est apte à effectuer la régulation paramètre par paramètre.

A cet effet, il comporte des moyens de gestion de priorité 10, aptes à commander un changement de paramètre en fonction de priorités prédéterminées.

Ces moyens de gestion 10 sont reliés par l'intermédiaire d'une interface 11 à une mémoire de paramètres 12, l'interface 11 pouvant être reliée à une liaison série 13, par exemple de type RS232, pour une connexion extérieure.

En outre, le circuit numérique de régulation 6 comporte des moyens de gestion de seuil de protection à plusieurs niveaux, avec accès hiérarchisé.

D'autre part, pour permettre le passage du mode normal au mode dégradé, le dispositif de commande 8 comporte des moyens de détection permettant de détecter un dysfonctionnement du circuit numérique de régulation 6, le passage du mode normal au mode dégradé étant effectué en cas de détection.

Enfin, le dispositif de régulation selon l'invention peut comporter des moyens d'indication de statut 14, tels que notamment le mode de fonctionnement et/ou les paramètres de programmation.

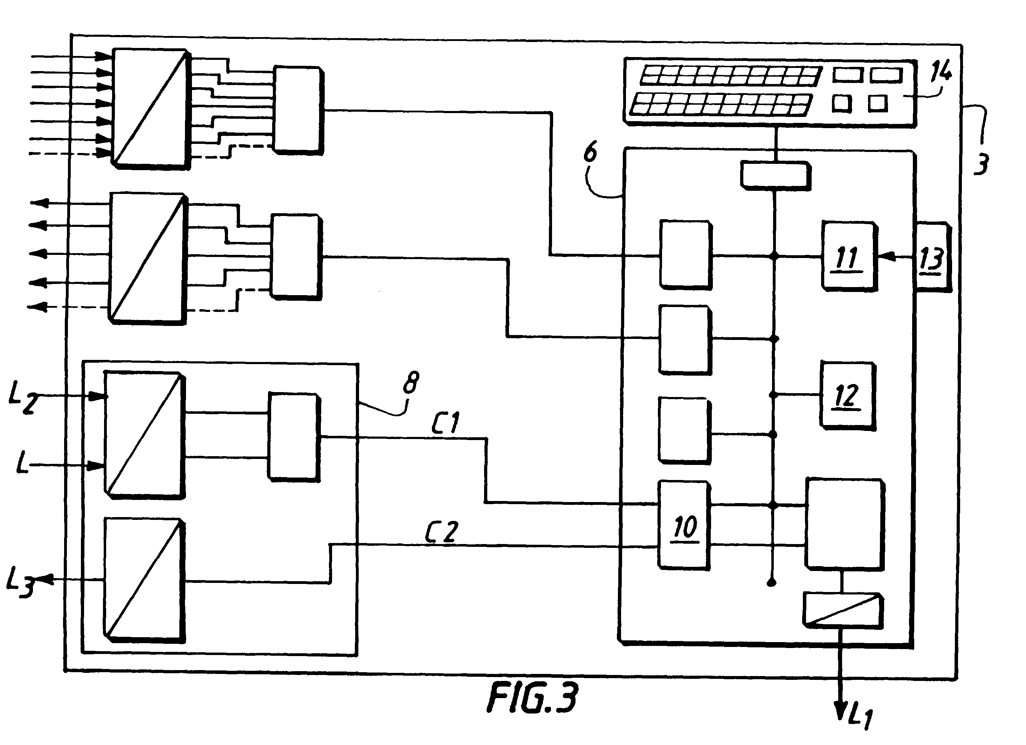

Les autres circuits du bloc numérique 3 qui sont représentés à la figure 3 ne sont pas décrits de manière détaillée car ils sont usuellement présents dans les régulateurs numériques connus de l'art antérieur.

Ce sont par exemple les circuits de détection, de protection, les interfaces, les convertisseurs numérique/analogiques, etc.

## Revendications

1. Dispositif de régulation d'un alternateur synchrone sans balais comprenant une excitatrice tournante à inducteur d'excitation fixe caractérisé en ce qu'il comporte en combinaison :
- un étage de puissance relié à l'alternateur ;
- un circuit analogique de régulation apte à être relié à l'étage de puissance, pour la régulation de plusieurs paramètres, notamment le courant d'excitation, la tension de sortie de l'alternateur, la tension à vide, le courant de court-circuit, le facteur de puissance et le statisme de l'alternateur ;
- un circuit numérique de régulation apte à être relié à l'étage de puissance, pour la régulation de plusieurs paramètres, notamment la tension de sortie de l'alternateur, la tension à vide, le courant de court circuit et le statisme de l'alternateur ; et
- un circuit de commande destiné à permettre le fonctionnement du dispositif de régulation suivant deux modes, à savoir un mode normal dans lequel la fonction de régulation est réalisée par le circuit numérique de régulation et un mode dit "dégradé" dans lequel la fonction de régulation est réalisée par le circuit analogique de régulation,
le circuit numérique de régulation étant isolé notamment mécaniquement et/ou magnétiquement de l'alternateur et étant relié au circuit de commande par des liaisons électriques isolées.

2. Dispositif de régulation selon la revendication 1, caractérisé en ce qu'en mode normal le circuit numérique de régulation commande l'étage de puissance.

3. Dispositif de régulation selon la revendication 1 ou 2, caractérisé en ce que le circuit numérique de régulation est monté dans un boîtier distinct de l'alternateur et le circuit analogique de régulation est embarqué dans l'alternateur.

4. Dispositif de régulation selon l'une quelconques des revendications 1 à 3, caractérisé en ce que le circuit de commande comporte :
- un dispositif de commande analogique/numérique destiné à recevoir des informations des circuits analogiques et numériques de régulation, et
- un commutateur commandé par le dispositif de commande de manière à positionner le dispositif de régulation en mode normal ou en mode dégradé en fonction desdites informations reçues.

5. Dispositif de régulation selon la revendication 4, caractérisé en ce que le commutateur est embarqué dans l'alternateur alors que le dispositif de commande est isolé notamment mécaniquement et/ou magnétiquement de l'alternateur.

6. Dispositif de régulation selon l'une quelconques des revendications 1 à 5, caractérisé en ce que le circuit numérique de régulation est apte à effectuer la régulation paramètre par paramètre.

7. Dispositif de régulation selon la revendication 6, caractérisé en ce que le circuit numérique de régulation comporte des moyens de gestion de priorité aptes à commander un changement de paramètre en fonction de ces priorités.

8. Dispositif de régulation selon l'une quelconques des revendications 1 à 7, caractérisé en ce que le circuit numérique de régulation comporte, en outre, des moyens de gestion de seuil de protection à plusieurs niveaux, avec accès hiérarchisé.

9. Dispositif de régulation selon l'une quelconques des revendications 1 à 8, caractérisé en ce que le commutateur est de type analogique pour faibles signaux.

10. Dispositif de régulation selon l'une quelconques des revendications 1 à 9, caractérisé en ce que le dispositif de commande comporte des moyens de détection permettant de détecter un dysfonctionnement du circuit numérique de régulation, le circuit de commande faisant passer le dispositif de régulation du mode normal au mode dégradé en cas de détection.

11. Dispositif de régulation selon l'une quelconques des revendications 1 à 10, caractérisé en ce qu'il comporte des moyens d'indication de statuts tels que notamment le mode de fonctionnement et/ou les paramètres de programmation.

## Patentansprüche

1. Einstellvorrichtung eines synchronen Wechselstromgenerators ohne Schleifkontakt, umfassend einen Rotationserreger mit festem Erregerinduktor, dadurch gekennzeichnet, daß sie kombiniert umfaßt:
- eine mit dem Wechselstromgenerator verbundene Leistungsstufe;
- einen analogen Einstellstromkreis, der geeignet ist, mit der Leistungsstufe verbunden zu werden, für die Einstellung mehrerer Parameter, insbesondere des Erregerstroms, der Ausgangsspannung des Wechselstromgenerators, der offenen Spannung, des Kurzschlußstroms, des Leistungsfaktors und der statischen Aufladung des Wechselstromgenerators;
- einen digitalen Einstellstromkreis, der geeignet ist, mit der Leistungsstufe verbunden zu werden, für die Einstellung mehrerer Parameter, insbesondere der Ausgangsspannung des Wechselstromgenerators, der offenen Spannung, des Kurzschlußstroms und der statischen Aufladung des Wechselstromgenerators; und
- einen Steuerstromkreis, der dazu bestimmt ist, die Funktionsweise der Einstellvorrichtung gemäß zwei Modi zu erlauben, nämlich einem normalen Modus, in dem die Einstellfunktion durch den digitalen Einstellstromkreis realisiert wird, und einem sogenannten "abgestuften" Modus, in dem die Einstellfunktion durch den analogen Einstellstromkreis realisiert wird,
wobei der digitale Einstellstromkreis insbesondere mechanisch und / oder magnetisch vom Wechselstromgenerator isoliert ist und mit dem Steuerstromkreis durch isolierte elektrische Verbindungen verbunden ist.

2. Einstellvorrichtung gemäß Anspruch 1, dadurch gekennzeichnet, daß der digitale Einstellstromkreis im normalen Modus die Leistungsstufe steuert.

3. Einstellvorrichtung gemäß Anspruch 1 oder 2, dadurch gekennzeichnet, daß der digitale Einstellstromkreis in einem vom Wechselstromgenerator verschiedenen Gehäuse untergebracht ist und der analoge Einstellstromkreis im Wechselstromgenerator eingebaut ist.

4. Vorrichtung gemäß Anspruch 1 bis 3, dadurch gekennzeichnet, daß der Steuerstromkreis umfaßt:
- eine analoge / digitale Steuervorrichtung, die dazu bestimmt ist, Informationen aus den analogen und digitalen Einstellstromkreisen zu empfangen, und
- einen durch die Steuervorrichtung derart gesteuerten Schalter, daß die Einstellvorrichtung im normalen Modus oder im abgestuften Modus in Abhängigkeit von den empfangenen Informationen positioniert wird.

5. Einstellvorrichtung gemäß Anspruch 4, dadurch gekennzeichnet, daß der Schalter im Wechselstromgenerator eingebaut ist, während die Steuervorrichtung insbesondere mechanisch und / oder magnetisch vom Wechselstromgenerator isoliert ist.

6. Einstellvorrichtung gemäß Anspruch 1 bis 5, dadurch gekennzeichnet, daß der digitale Einstellstromkreis geeignet ist, die Einstellung Parameter pro Parameter durchzuführen.

7. Einstellvorrichtung gemäß Anspruch 6, dadurch gekennzeichnet, daß der digitale Einstellstromkreis Mittel zur Verwaltung der Vorrangigkeit umfaßt, die geeignet sind, eine Parameteränderung im Hinblick dieser Prioritäten zu steuern.

8. Einstellvorrichtung gemäß Anspruch 1 bis 7, dadurch gekennzeichnet, daß der digitale Einstellstromkreis außerdem Mittel zur Verwaltung der Schutzschwelle auf mehreren Ebenen mit hierarchisiertem Zugang umfaßt.

9. Einstellvorrichtung gemäß Anspruch 1 bis 8, dadurch gekennzeichnet, daß der Schalter vom analogen Typ für schwache Signale ist.

10. Einstellvorrichtung gemäß Anspruch 1 bis 9, dadurch gekennzeichnet, daß die Steuervorrichtung Prüfmittel umfaßt, die das Feststellen einer Störung des digitalen Einstellstromkreises erlauben, wobei der Steuerstromkreis bei Feststellung die Einstellvorrichtung vom normalen Modus in den abgestuften Modus übergehen läßt.

11. Einstellvorrichtung gemäß Anspruch 1 bis 10, dadurch gekennzeichnet, daß sie Mittel zur Statusanzeige umfaßt, wie zum Beispiel insbesondere des Funktionsmodus und / oder der Programmierparameter.

## Claims

1. A device for regulating a synchronous brushless alternator comprising a rotary exciter with a fixed excitation winding and which has in combination:
- a power stage connected to the alternator;
- an analogue regulating circuit able to be connected to the power stage, for regulating several parameters, notably the excitation current, the output voltage of the alternator, the offload voltage, the short-circuit current, the power factor and the steady state speed regulation of the alternator;
- a digital regulating circuit able to be connected to the power stage, for regulating several parameters, notably the output voltage of the alternator, the offload voltage, the short-circuit current and the static charge on the alternator; and
- a control circuit intended to permit the functioning of the regulation device in two modes, namely a normal mode in which the regulation function is performed by the digital regulating circuit and a so-called "degraded" mode in which the regulation function is performed by the analogue regulating circuit,
the digital regulating circuit being isolated, notably mechanically and/or magnetically, from the alternator and being connected to the control circuit by isolated electrical connections.

2. A regulation device according to Claim 1, characterised in that in normal mode the digital regulating circuit controls the power stage.

3. A regulation device according to Claim 1 or 2, characterised in that the digital regulating circuit is mounted in a housing distinct from the alternator and the analogue regulating circuit is fitted in the alternator.

4. A regulation device according to any one of Claims 1 to 3, characterised in that the control circuit includes:
- an analogue/digital control device intended to receive information from the analogue and digital regulating circuits, and
- a switch controlled by the control device so as to position the regulating device in normal mode or in degraded mode according to the said information received.

5. A regulation device according to Claim 4, characterised in that the switch is fitted in the alternator whilst the control device is isolated, notably mechanically and/or magnetically, from the alternator.

6. A regulation device according to any one of Claims 1 to 5, characterised in that the digital regulating circuit is able to effect the regulation parameter by parameter.

7. A regulation device according to Claim 6, characterised in that the digital regulating circuit has priority management means able to control a change in parameter according to these priorities.

8. A regulation device according to any one of Claims 1 to 7, characterised in that the digital regulating circuit also includes protection threshold management means at several levels, with hierarchical access.

9. A regulation device according to any one of Claims 1 to 8, characterised in that the switch is of the analogue type for weak signals.

10. A regulation device according to any one of Claims 1 to 9, characterised in that the control device has detection means for detecting malfunctioning of the digital regulating circuit, the control circuit causing the regulation device to change from normal mode to degraded mode in the event of detection.

11. A regulation device according to any one of Claims 1 to 10, characterised in that it has status indication means such as notably for the operating mode and/or the programming parameters.
